# EUROPEAN PATENT APPLICATION

(11) **EP 3 287 980 A1**
(43) Date of publication of application: **28.02.2018**
(21) Application number: 17170268.1
(22) Date of filing: 09.05.2017
(51) Int. Cl.: G06Q 30/06

(54) **ELECTRONIC SHELF LABEL**

(30) Priority: 24.08.2016 CN 201610724496
(71) Applicant: Zhejiang Hanshow Technology Co. Ltd, Jiaxing Zhejiang (CN)
(72) Inventor: HOU, Shiguo, Chaoyang District, Beijing (CN); SHEN, Ming, Chaoyang District, Beijing (CN); LU, Chaoqun, Chaoyang District, Beijing (CN)
(74) Representative: Boult Wade Tennant

(57) **Abstract**

The present disclosure provides an electronic shelf label, comprising: a communication module configured to communicate with an Access Point (AP) by using a 2.4G wireless communication protocol, and receive electronic shelf label display information provided by the AP and transmit to a Micro Control Unit (MCU); a magnetic control switch configured to trigger the MCU to start or stop running; the MCU configured to receive the electronic shelf label display information transmitted by the communication module, and after being triggered by the magnetic control switch to start running, control a display screen and/or an indicator lamp for displaying according to the electronic shelf label display information.

## Description

### TECHNICAL FIELD

The present disclosure relates to the field of electronic display technology, and particularly, to an electronic shelf label.

### BACKGROUND

The technology that most of the existing electronic shelf label systems use, e.g., infrared communication technology or RFID communication technology, is not a wireless access technology. As to the infrared communication technology, infrared light is used to perform data communication, a nominal communication rate can reach 4 Mbps, the point-to-point data communication is supported, and it is not susceptible to the interference from the external environment. However, the technology has the following disadvantages: the infrared light can only be transmitted linearly, or the transmission reliability can only be ensured after limited times of refractions, thus the influence from the communication angle is great, and once the communication angle is larger than 30 degrees, the communication effect will be obviously affected. Such characteristics lead to that the issues such as an orientation angle, blind angle coverage, etc. need to be considered during installation on site, thus the convenience of the installation on site is affected and the maintenance cost is increased, which challenges the system reliability. As to the RFID communication technology, generally, the low frequency transmission technology below 1 MHz (about 135 KHz) is used. The low frequency transmission is actually a low frequency inductive coupling technology, which uses a communication mode similar to a master-slave mode, wherein as an initiator, the master end can identify a target object (slave end) through the radio frequency signal and can perform data communication. However, the technology has the following disadvantage that in order to achieve the large-space coverage effect, the coupling antenna of the transmitting end must be very large in size and arranged on a ceiling, so the implementation complexity and the maintenance difficulty are very high, which increases the cost.

### SUMMARY

An embodiment of the present disclosure provides an electronic shelf label, which is easy to realize an omni-directional communication ability without blind angle, and a compact design of the antenna, thus the installation is convenient, and the cost of the implementation and maintenance is low.

The electronic shelf label comprises a communication module, a magnetic control switch, a Micro Control Unit (MCU), a display screen and an indicator lamp;
the communication module is configured to communicate with an Access Point (AP) by using a 2.4G wireless communication protocol, receive electronic shelf label display information provided by the AP, and transmit the electronic shelf label display information to the MCU;
the magnetic control switch is configured to trigger the MCU to start or stop running;
the MCU is configured to receive the electronic shelf label display information transmitted by the communication module; and after being triggered by the magnetic control switch to start running, control the display screen and/or the indicator lamp for displaying according to the electronic shelf label display information.

The electronic shelf label provided by the present disclosure uses the 2.4G wireless communication protocol to perform communication with the AP; based on the 2.4G RF characteristics, it is easy to realize a compact design of the antenna, and an omni-directional communication ability without blind angle, thus the installation of the electronic shelf label is convenient, and the cost of the implementation and maintenance is low. Moreover, by using the magnetic control switch, the MCU can be quickly triggered to start running.

The present disclosure further provides an electronic shelf label, which is easy to realize an omni-directional communication ability without blind angle, and a compact design of the antenna, thus the installation is convenient, and the cost of the implementation and maintenance is low.

The electronic shelf label comprises a communication module, a Micro Control Unit (MCU), a display screen and an indicator lamp;
the communication module is configured to communicate with an Access Point (AP) by using a 2.4G wireless communication protocol, receive electronic shelf label display information and first trigger information provided by the AP and transmit the electronic shelf label display information and the first trigger information to the MCU, the first trigger information being used to trigger the MCU to start or stop running;
the MCU is configured to receive the electronic shelf label display information and the first trigger information transmitted by the communication module; and after being triggered by the first trigger information to start running, control the display screen and/or the indicator lamp for displaying according to the electronic shelf label display information.

The electronic shelf label provided by the present disclosure uses the 2.4G wireless communication protocol to perform communication with the AP; based on the 2.4G RF characteristics, it is easy to realize a compact design of the antenna, and meanwhile it is easy to realize an omni-directional communication ability without blind angle, thus the installation of the electronic shelf label is convenient, and the cost of the implementation and maintenance is low. The MCU is triggered to start running by providing the trigger information by the AP.

### BRIEF DESCRIPTION OF DRAWINGS

In order to more clearly describe the technical solutions in the embodiments of the present disclosure or the prior art, the accompanying drawings to be used in the descriptions of the embodiments or the prior art will be briefly introduced as follows. Obviously, the accompanying drawings in the following descriptions just illustrate some embodiments of the present disclosure, and a person skilled in the art can obtain other accompanying drawings from them without paying any creative effort.
Fig. 1 is a structural schematic diagram of an electronic shelf label provided by an embodiment of the present disclosure; and
Fig. 2 is a structural schematic diagram of an electronic shelf label provided by an embodiment of the present disclosure.

### DESCRIPTION OF EMBODIMENTS

The technical solutions of the embodiments of the present disclosure will be clearly and completely described as follows with reference to accompanying drawings of the embodiments of the present disclosure. Obviously, the embodiments described herein are just parts of the embodiments of the present disclosure rather than all the embodiments. Based on the embodiments of the present disclosure, any other embodiment obtained by a person skilled in the art without paying any creative effort shall fall within the protection scope of the present disclosure.

The existing electronic shelf labels generally use the infrared communication technology and the RFID communication technology. However, the two technologies have the following disadvantages: the infrared light can only be transmitted linearly, and it is greatly influenced by the communication angle. Such characteristics lead to that the issues such as an orientation angle, blind angle coverage, etc. need to be considered during installation on site, thus the convenience of the installation on site is affected and the maintenance cost is increased. In the RFID communication technology, in order to achieve the large-space coverage effect, the coupling antenna of the transmitting end must be very large in size and arranged on a ceiling, so the implementation complexity and the maintenance difficulty are very high, which increases the cost. Based on the above problems existing in the prior art, the embodiments of the present disclosure propose an electronic shelf label to solve the above problems existing in the prior art.

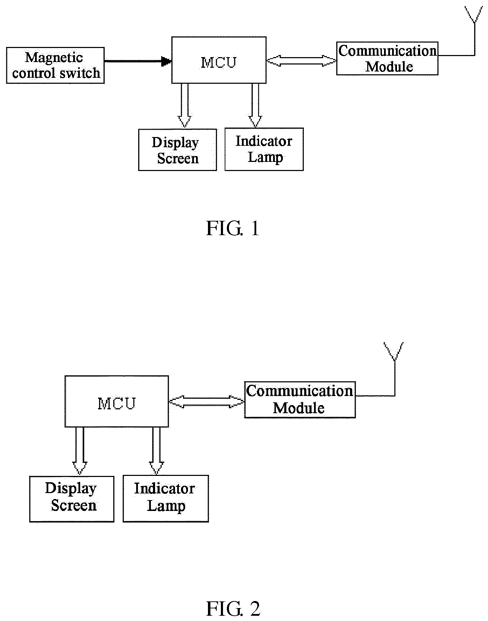

Fig. 1 is a structural schematic diagram of an electronic shelf label provided by an embodiment of the present disclosure. As illustrated in Fig. 1, the electronic shelf label comprises a communication module, a magnetic control switch, a Micro Control Unit (MCU), a display screen and an indicator lamp;
the communication module is configured to communicate with an Access Point (AP) by using a 2.4G wireless communication protocol, and receive electronic shelf label display information provided by the AP and transmit the electronic shelf label display information to the MCU;
the magnetic control switch is configured to trigger the MCU to start or stop running; and
the MCU is configured to receive the electronic shelf label display information transmitted by the communication module; and after being triggered by the magnetic control switch to start running, control the display screen and/or the indicator lamp for displaying according to the electronic shelf label display information.

The embodiments of the present disclosure further provide another electronic shelf label, and the structure thereof is illustrated in Fig. 2. The electronic shelf label comprises a communication module, a MCU, a display screen and an indicator lamp;
the communication module is configured to communicate with an AP by using a 2.4G wireless communication protocol, receive electronic shelf label display information and first trigger information provided by the AP, and transmit the electronic shelf label display information and the first trigger information to the MCU, the first trigger information being used to trigger the MCU to start or stop running; and
the MCU is configured to receive the electronic shelf label display information and the first trigger information transmitted by the communication module; and after being triggered by the first trigger information to start running, control the display screen and/or the indicator lamp for displaying according to the electronic shelf label display information.

During implementation, with respect to the above problems existing in the infrared communication technology and the RFID communication technology employed by the existing electronic shelf labels, in this embodiment, the communication module in either electronic shelf label communicates with the access point (AP, a relay for the electronic shelf label to communicate with the background server) by using the 2.4G wireless communication protocol, wherein the communication module may be a Radio Frequency (RF) communication module. The use of a 2.4GHz technology is mainly due to the 2.4G technology being mature, and there is a standard communication frequency band (2.4GHz ISM) planed internationally. Based on the 2.4G radio frequency characteristics, it is easy to implement a compact design (an antenna can be designed to be small and exquisite); meanwhile, it is easy to realize an omni-directional communication ability without blind angle (the antenna can realize the omni-directional communication), thus the installation of the electronic shelf label is convenient, and the cost of the implementation and maintenance is low.

In addition, as to an application scene of the electronic shelf label, i.e., large shopping mall and supermarket (the electronic shelf label can also be applied to other application scenes), a communication network covering all the commodities is formed after arranging a lot of electronic shelf labels. Whether or not the communication network can collect more information for the large shopping mall and supermarket (e.g., the clients' preference information about the commodities), and whether or not those information can be effectively and timely transmitted to the background server, become new requirements to the electronic shelf labels. With respect to those requirements, the electronic shelf label must have balanced uplink and downlink communication capabilities. However, the previous infrared communication technology generally employs an infrared transceiving tube as the communication device, and in order to meet the requirement of ultra-low power consumption (the battery of the electronic shelf label needs not to be replaced within a usage time of 5 years). The infrared emitting capability of the infrared transceiving tube is not strong, and this results in that the performance of the uplink communication is relatively weak, and it is difficult to meet the requirement of instant uplink communication. In the previous RFID communication technology, the communication must be initiated by a master end, and a slave end cannot perform information transmission in real time, and this also results in that the performance of the uplink communication is poor, which cannot meet the requirement of independent uplink communication of the large shopping mall and supermarket.

As to the 2.4 GHz technology employed in the embodiments of the present disclosure, the uplink channel (through which the electronic shelf label transmits information to the AP) and downlink channel (through which the AP transmits information to the electronic shelf label) thereof substantially have the same capability, and the uplink channel thereof has a burst capability, and in this way, it is possible to solve the problems existing in the infrared communication technology and the RFID communication technology that the uplink communication capability and the downlink communication capability are unbalanced, and the timeliness and bandwidth of the uplink communication capability are relatively poor and also the problem of data throughout, thereby improve the informationization capability of the shopping mall and supermarket.

During implementation, the MCU in the existing electronic shelf label is in a high power consumption state, and will not start running immediately, so that the start time is too long. In view of this, in this embodiment, the first kind of electronic shelf label (as illustrated in Fig. 1) uses the magnetic control switch to trigger the MCU to start or stop running. There are many kinds of magnetic control switches, such as reed switch, Hall switch, etc. After being contacted by an external magnetically controlled device (e.g., an external remote controller), the magnetic control switch will close or open immediately, and then transmit a trigger signal to the MCU so that the MCU starts or stops running at once. The triggering of the MCU by the magnetic control switch is instant. The second kind of electronic shelf label (as illustrated in Fig. 2) uses the 2.4G RF trigger signal (first trigger information) provided by the AP to control the MCU to start or stop running.

During implementation, in this embodiment, the time for the communication module to receive the electronic shelf label display information and transmit the electronic shelf label display information to the MCU is flexible. For example, as to the first kind of electronic shelf label, when the MCU is triggered to start running through the magnetic control switch, the communication module may firstly receive the electronic shelf label display information provided by the AP and transmit the electronic shelf label display information to the MCU, and then the electronic shelf label display information can be directly used after the magnetic control switch triggers the MCU to start running, which is equivalent to pre-setting the electronic shelf label display information into the MCU. The magnetic control switch may also firstly trigger the MCU to start running, and then the communication module receives the electronic shelf label display information provided by the AP and transmits the electronic shelf label display information to the MCU. As to the second kind of electronic shelf label, after receiving first trigger information provided by the AP and triggering the MCU to start running through the first trigger information, the communication module may receive the electronic shelf label display information provided by the AP and transmit the electronic shelf label display information to the MCU; or after receiving the electronic shelf label display information provided by the AP and transmitting the electronic shelf label display information to the MCU, the communication module may receive first trigger information provided by the AP and trigger the MCU to start running through the first trigger information, and then use the electronic shelf label display information directly, which is equivalent to pre-setting the electronic shelf label display information into the MCU.

During implementation, in this embodiment, the electronic shelf label display information may comprise control information and a display content to be displayed. Since the MCU can control both the display screen and the indicator lamp, after starting running, the MCU firstly determines whether the display screen, the indicator lamp, or both of them need to be controlled according to the control information in the electronic shelf label display information. As to the two kinds of electronic shelf labels, the MCU therein is configured to:
control the display screen to display a display content in the electronic shelf label display information, when it is determined according to the control information in the electronic shelf label display information that the display screen needs to be controlled for displaying;
control the indicator lamp to display the display content in the electronic shelf label display information, when it is determined according to the control information in the electronic shelf label display information that the indicator lamp needs to be controlled for displaying.

During implementation, the control information in the electronic shelf label display information may be a flag bit set in the electronic shelf label display information. For example, when the flag bit is '1', it is determined to control the display screen, and when the flag bit is '0', it is determined to control the indicator lamp. Other manners may also be used to distinguish the control information in the electronic shelf label display information being used to control the display screen or the indicator lamp.

During implementation, in this embodiment, when the MCU determines to control the display screen for displaying, as to the first kind of electronic shelf label, the magnetic control switch approaches (or contacts) the electronic shelf label, so as to trigger the MCU to control the display screen to perform page switching. As to the second kind of electronic shelf label, the MCU controls the display screen to perform page switching according to pre-set page turning information comprised in the display content in the electronic shelf label display information; or the communication module receives second trigger information provided by the AP and transmits the second trigger information to the MCU, and after being triggered by the second trigger information to start running, the MCU controls the display screen to perform page switching. The pre-set page turning information may contain information such as the page number, the time length, etc. of the screen switching. When the electronic shelf label is applied to a large shopping mall and supermarket, the display content of the electronic shelf label display information may comprise commodity information, such as name, origin, price, unit, etc. of the commodity. The content to be displayed on each page may further comprise information such as one-dimensional code, two-dimensional code and picture, etc. In addition, commodity discount information, etc. may also be comprised.

During implementation, there are various kinds of display screens, such as a LED display screen and a liquid crystal display (LCD) etc. The LCD is mainly used in the existing industry. In this embodiment, the display screen may also be an LCD, but the LCD has the problems of a viewing angle of display, the contrast ratio being impossible to reach an optimal state, the power consumption being high, etc. With respect to the problems existing in the LCD, the display screen of the present disclosure may be an Electronic Paper Display (EPD). The EPD electronic paper technology well solves those problems: Firstly, in the aspect of display, the EPD has no viewing angle problem, and its contrast ratio is nearly the same as that of printed paper, so that the EPD is suitable to the application scene such as the large shopping mall and supermarket. Meanwhile, this high contrast ratio ensures the smooth use of the one-dimensional code and two-dimensional code, and facilitates the client's informationzation such as the functions of code scanning, online payment, etc. Secondly, in the aspect of power consumption, the EPD has very low power consumption, and very few electricity is consumed, so that the EPD is suitable to the long-term application scene of low power consumption. By using the EPD, a better display effect can be provided to the client.

During implementation, in this embodiment, the electronic shelf label display information may comprise a pre-set flickering color, flickering frequency and/or flickering duty cycle (a ratio of lamp on time to lamp off time). When the MCU controls the indicator lamp for displaying, the MCU may control the indicator lamp according to the pre-set flickering color, flickering frequency and/or flickering duty cycle. Since there are varieties of indicator lamps, e.g., there may be a plurality of LEDs of different colors, or three primary colors (red, blue and green) based RGB LEDs etc., so that the ways by which the MCU controls different kinds of indicator lamps are different. For example, when the indicator lamp is a plurality of LEDs of different colors, the MCU controls, according to the pre-set flickering color, flickering frequency and/or flickering duty cycle, the LED of a corresponding color among the plurality of LEDs of different colors to flicker. When the indicator lamp is RGB LEDs, the MCU controls, according to the pre-set flickering color, flickering frequency and/or flickering duty cycle, the RGB LEDs to emit light of a corresponding color and flicker. For example, when the electronic shelf label is applied to the large shopping mall and supermarket, the client defines that the red lamp flickers with a flickering duty cycle of 30ms On/ls Off. At that time, the MCU controls a single red LED to flicker in the manner of 30ms On/ls Off, or controls the RGB LED to emit red light and then flicker in the manner of 30ms On/ls Off; the client defines that the green lamp flickers with a flickering duty cycle of 1ms On/30s Off, the MCU controls a single green LED to flicker in the manner of 1ms On/30s Off, or controls the RGB LED to emit green light and then flicker in the manner of 1ms On/30s Off.

During implementation, all the display contents in the existing electronic shelf label are stored in the Random Access Memory (RAM) of the MCU. The RAM cannot retain data when the power is off, and the data stored therein will be lost. In view of this, in this embodiment, the electronic shelf label may further comprise a storage device to store the electronic shelf label display information. The storage device will not lose data when the power is off, and after the electronic shelf label is powered on and operates again, the part of the data lost in the RAM when the power is off can be recovered. Specifically, after receiving the electronic shelf label display information provided by the AP, the communication module transmits the electronic shelf label display information to the storage device in addition to the MCU. When the electronic shelf label is powered on again after power off, the MCU can obtain corresponding electronic shelf label display information at the time of power off from the storage device.

In conclusion, as compared with the existing electronic shelf label, the above two kinds of electronic shelf labels have the following advantages:
1) The 2.4G wireless communication protocol is used for performing communication with the AP; with the 2.4G RF characteristics, it is easy to realize a compact design of the antenna, and an omni-directional communication ability without blind angle, thus the installation of the electronic shelf label is convenient, and the cost of the implementation and maintenance is low.
2) The magnetic control switch may be used to quickly trigger the MCU to start running, and the trigger information provided by the AP may also be used to trigger the MCU to start running.
3) The magnetic control switch may be used to trigger the MCU to control the page switching of the display screen, or an automatic page switching may be performed through the page turning information provided by the AP, or the page switching of the display screen may be controlled through the trigger information provided by the AP.
4) The EPD has no viewing angle problem, and its contrast ratio is almost the same as that of printed paper, and the power consumption is very low.
5) The problem that the RAM cannot retain data can be solved by providing a storage device in the electronic shelf label.

A person skilled in the art should understand that the embodiments of the present disclosure can be provided as a method, a system or a computer program product. Therefore, the present disclosure can take the form of a full hardware embodiment, a full software embodiment, or an embodiment with combination of software and hardware aspects. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flow chart and/or block diagram of the method, device (system) and computer program product according to the embodiment of the present disclosure. It shall be understood that each flow and/or block in the flow chart and/or block diagram and a combination of the flow and/or block in the flow chart and/or block diagram can be realized by the computer program instructions. These computer program instructions can be provided to a general computer, a dedicated computer, an embedded processor or a processor of other programmable data processing device to generate a machine, such that the instructions performed by the computer or the processor of other programmable data processing devices generate the device for implementing the function designated in one flow or a plurality of flows in the flow chart and/or a block or a plurality of blocks in the block diagram.

These computer program instructions can also be stored in a computer readable memory capable of directing the computer or other programmable data processing devices to operate in a specific manner, such that the instructions stored in the computer readable memory generate a manufactured article including an instruction device which implements the function designated in one flow or a plurality of flows in the flow chart and/or a block or a plurality of blocks in the block diagram.

These computer program instructions can also be loaded onto the computer or other programmable data processing devices, such that a series of operation steps is executed on the computer or other programmable devices to generate the processing realized by the computer, therefore the instructions executed on the computer or other programmable devices provide the steps for implementing the function designated in one flow or a plurality of flows in the flow chart and/or a block or a plurality of blocks in the block diagram.

The above are only the preferred embodiments of the present disclosure, and are not used for limiting the present disclosure. For a person skilled in the art, the embodiments of the present disclosure can be modified and changed variously. Any modification, equivalent substitutions and improvements within the spirit and principle of the present disclosure shall be contained in the protection scope of the present disclosure.

## Claims

1. An electronic shelf label, comprising:
a communication module;
a magnetic control switch;
an Micro Control Unit (MCU);
a display screen; and
an indicator lamp,
the communication module is configured to communicate with an Access Point (AP) by using a 2.4G wireless communication protocol, receive electronic shelf label display information provided by the AP, and transmit the electronic shelf label display information to the MCU;
the magnetic control switch is configured to trigger the MCU to start or stop running;
the MCU is configured to receive the electronic shelf label display information transmitted by the communication module; and after being triggered by the magnetic control switch to start running, control the display screen and/or the indicator lamp for displaying according to the electronic shelf label display information.

2. The electronic shelf label according to claim 1, wherein the communication module is configured to:
after the magnetic control switch triggers the MCU to start running, receive the electronic shelf label display information provided by the AP, and transmit the electronic shelf label display information to the MCU;
or, before the magnetic control switch triggers the MCU to start running, receive the electronic shelf label display information provided by the AP, and transmit the electronic shelf label display information to the MCU.

3. The electronic shelf label according to claim 1, wherein the MCU is configured to:
control the display screen to display a display content in the electronic shelf label display information, when it is determined according to control information in the electronic shelf label display information that the display screen needs to be controlled for displaying;
control the indicator lamp to display a display content in the electronic shelf label display information, when it is determined according to the control information in the electronic shelf label display information that the indicator lamp needs to be controlled for displaying.

4. The electronic shelf label according to claim 3, wherein the magnetic control switch is further configured to trigger the MCU to control the display screen to perform page switching.

5. The electronic shelf label according to claim 1, wherein the display screen is an Electronic Paper Display (EPD) or a liquid crystal display (LCD).

6. The electronic shelf label according to claim 3, wherein the indicator lamp comprises a plurality of Light Emitting Diodes (LED) of different colors, or Red, Green, Blue (RGB) LEDs, wherein the MCU is configured to:
control , according to a pre-set flickering color, flickering frequency and/or flickering duty cycle, an LED of a corresponding color among the plurality of LEDs of different colors to flicker, when the indicator lamp is the plurality of LEDs of different colors;
control, according to a pre-set flickering color, flickering frequency and/or flickering duty cycle, the RGB LEDs to emit light of a corresponding color and flicker, when the indicator lamp is the RGB LEDs.

7. The electronic shelf label according to claim 1, further comprising:
a storage device configured to store the electronic shelf label display information.

8. An electronic shelf label, comprising:
a communication module;
an Micro Control Unit (MCU);
a display screen; and
an indicator lamp,
the communication module is configured to communicate with an Access Point (AP) by using a 2.4G wireless communication protocol, receive electronic shelf label display information and first trigger information provided by the AP, and transmit the electronic shelf label display information and the first trigger information to the MCU, the first trigger information being used to trigger the MCU to start or stop running;
the MCU is configured to receive the electronic shelf label display information and the first trigger information transmitted by the communication module; and after being triggered by the first trigger information to start running, control the display screen and/or the indicator lamp for displaying according to the electronic shelf label display information.

9. The electronic shelf label according to claim 8, wherein the communication module is configured to:
receive the first trigger information provided by the AP, and after triggering the MCU to start running through the first trigger information, receive the electronic shelf label display information provided by the AP and transmit the electronic shelf label display information to the MCU; or,
after receiving the electronic shelf label display information provided by the AP and transmitting the electronic shelf label display information to the MCU, receive the first trigger information provided by the AP, and trigger the MCU to start running through the first trigger information.

10. The electronic shelf label according to claim 8, wherein the MCU is configured to:
control the display screen to display a display content in the electronic shelf label display information, when it is determined according to a control information in the electronic shelf label display information that the display screen needs to be controlled for displaying;
control the indicator lamp to display a display content in the electronic shelf label display information, when it is determined according to the control information in the electronic shelf label display information that the indicator lamp needs to be controlled for displaying.

11. The electronic shelf label according to claim 10, wherein the display content in the electronic shelf label display information comprises pre-set page turning information;
the MCU is configured to:
control the display screen to perform page switching according to the pre-set page turning information.

12. The electronic shelf label according to claim 10, wherein the communication module is further configured to:
receive second trigger information provided by the AP, and transmit the second trigger information to the MCU;
the MCU is further configured to:
control the display screen to perform page switching after being triggered by the second trigger information to start running.

13. The electronic shelf label according to claim 8, wherein the display screen is an Electronic Paper Display (EPD) or a liquid crystal display (LCD).

14. The electronic shelf label according to claim 10, wherein the indicator lamp comprises a plurality of Light Emitting Diodes (LED) of different colors, or Red, Green, Blue (RGB) LEDs,
wherein the MCU is configured to:
control, according to a pre-set flickering color, flickering frequency and/or flickering duty cycle, an LED of a corresponding color among the plurality of LEDs of different colors to flicker, when the indicator lamp is the plurality of LEDs of different colors;
control, according to a pre-set flickering color, flickering frequency and/or flickering duty cycle, the RGB LEDs to emit light of a corresponding color and flicker, when the indicator lamp is the RGB LEDs.

15. The electronic shelf label according to claim 10, further comprising:
a storage device configured to store the electronic shelf label display information.
